# EUROPEAN PATENT APPLICATION

(11) **EP 1 043 139 A2**
(43) Date of publication of application: **11.10.2000**
(21) Application number: 00500037.7
(22) Date of filing: 10.03.2000
(51) Int. Cl.: B29C 41/04, B29C 41/20, B29C 41/22, B29K 23/00, B29K 77/00, B29L 22/00

(54) **A method for the manufacture of hollow bodies which do not contaminate the products contained therein**

(30) Priority: 23.03.1999 ES 9900579
(71) Applicant: Bullich Trallero, Javier, 08226 Terrassa (Barcelona) (ES)
(72) Inventor: Bullich Trallero, Javier, 08226 Terrassa (Barcelona) (ES)
(74) Representative: Curell Aguilà, Marcelino

(57) **Abstract**

This method for the manufacture of hollow bodies which do not contaminate the products contained therein, consists of maintaining the heat of molding of a hollow body, forming a container (1) having an embouchure (2) and produced by molding a first thermoplastic synthetic resin, in which there is applied in the interior thereof, a set amount of a second thermoplastic synthetic resin (9) having a melting point lower than the temperature of the hollow body due to the residual molding heat thereof, after which the second resin (9) is rotary molded within the hollow body, which acts as a mold, until the second resin (9), after being melted by the residual heat, has solidified forming a lining (10) applied over the entire inner surface of the hollow body and the entire inner periphery of the rim of the embouchure (2).

## Description

### Field of the Invention

This invention relates to a method for the manufacture of hollow bodies which do not contaminate the products contained therein, particularly hollow bodies which are produced by molding thermoplastic synthetic resins and are directed for forming containers which, provided with an embouchure for the installation of stop valves and the like, are completely and homogeneously recyclable at the end of their working life.

### Prior Art

Spanish patents 9200793, 9300671 and 9602003 and U.S. patent 4,579,242 disclose the production of hollow bodies by injecting or casting a thermoplastic synthetic resin, which are formed by welding together two or more parts to form containers having an embouchure and are preferably used to contained pressurized fluids in water treatment plants.

It happens that, with many of these containers, it is necessary to fit metal inserts to allow for the attachment of the containers to vertical walls, to assemble support means or install stop valves, which means that these containers are not formed from an homogenous material, a fact which hinders the recycling thereof.

Also, when such containers are used in water treatment plants for swimming pools, boilers, industry, etc. it does not matter that the constituent material thereof may confer a slight taste to the water, since this is not for human or animal consumption.

However, when the fluids contained therein, either water, carbonated drinks or others, are for human consumption, it is very important that the containers therefor do not transmit any taste to the fluid.

### Summary of the Invention

With a view to obtaining containers wherein the constituent material thereof does not contaminate the fluid contained therein and that such material be a homogeneously recyclable material, the solution has been adopted of providing such containers with a barrier, in the form of an internal lining of an innocuous material which does not contaminate the fluid, which has recycling features similar to those of the constituent material of the container, with said barrier being in direct contact with the fluid and separating it from the contaminating walls of the container.

In accordance with the foregoing ideas, there has been developed the method of the invention, according to which there is maintained the heat of molding of a hollow body, forming a container having an embouchure and produced by molding a first thermoplastic synthetic resin, in the interior of which there is applied, through the embouchure thereof, a set amount of a second thermoplastic synthetic resin having a melting point lower than the temperature of the hollow body due to the residual molding heat, after which said second resin is rotary molded within the hollow body, which acts as a mold, until the second resin, after being melted by the said residual heat of molding, has solidified forming a lining applied over the entire inner surface of the hollow body and the entire inner periphery of the rim of the embouchure thereof.

One feature of the invention is that the amount of second resin used is determined in terms of the thickness of the lining to be achieved and this is determined by the amount of residual heat of the body and the nature of said second resin.

A further feature of the invention is that the rim of the container embouchure is molded so as to form an annular shoulder at the bottom thereof and a screw thread on the cylindrical wall thereof.

Yet another feature of the invention is that the lining, formed by the solidification of the second synthetic resin, forms a flange on the annular shoulder of the rim of the container embouchure.

A further feature of the invention is that an also internally threaded ring is screwed into the screw thread on the rim of the container until it becomes firmly seated on the annular shoulder of the rim and hermetically traps the flange of the lining, by way of an O-ring seal included in an annular groove on the inner edge of said ring. The ring will preferably be made by injection molding of a synthetic resin, particularly polypropylene.

Yet a further feature of the invention is that an axial slot is formed between the ring and the container embouchure rim and being produced in the same point on the screw thread of both, houses a key formed by solidification of a material injected into said slot.

The invention contemplates that the first thermoplastic synthetic resin be preferably a polyamide, such as caprolactam, and that the second resin be, also preferably, one of the group comprising polyethylene, polypropylene and polyethylene terephthalate, either alone or in combination.

Finally, the invention also contemplates that if the container is at room temperature, it be heated to a temperature above the melting point of the second resin, after which this second resin is fed into the container and is rotary molded therein to form the lining.

### Brief Description of the Drawing

To facilitate the understanding of the foregoing ideas, there is described an embodiment of the invention, with reference to the accompanying illustrative drawings, in which:
Figure 1 is a diametrical cross section view of a container in which, freshly formed and maintaining the molding heat, there has been fed the second thermoplastic resin and which has been placed on rotary molding means;
Figure 2 is a schematic cross section view on a smaller scale of the container of Figure 1;
Figure 3 is similar to Figure 1 and shows the container after the rotary molding of the second thermoplastic resin forming the internal lining has finished;
Figure 4 is similar to Figure 2 and is a schematic cross section view on a smaller scale of the container of Figure 3;
Figure 5 is a diametrical cross section view of the end of the container of Figure 3, corresponding to the charging embouchure thereof, in which the means for fixing and sealing the internal lining are to be seen;
Figure 6 shows a detail, on a larger scale, of the rim of the embouchure of the container of Figure 5;
Figure 7 is a plan view of the embouchure of the container of Figures 5 and 6, showing the arrangement of the fixing key for the doubly threaded sealing ring.

### Detailed Description of the Invention

The container 1, formed by a hollow body formed by the association of two or more parts, as disclosed in the above mentioned Spanish patent 9300671, or integrally formed by rotary molding, is made from a thermoplastic synthetic resin and is provided with, at least, one embouchure 2 for access to the interior thereof and the fitting of a stop valve, an automatic controlled evacuation device, a plug, etc.

The embouchure 2 comprises a rim, which is formed internally by a threaded cylindrical portion 3 which is followed by an annular shoulder 4 which, in turn, defines a passage 5 of smaller diameter than that of the said threaded cylindrical portion 3. The external 6 and internal 7 edges of the said annular shoulder are rounded.

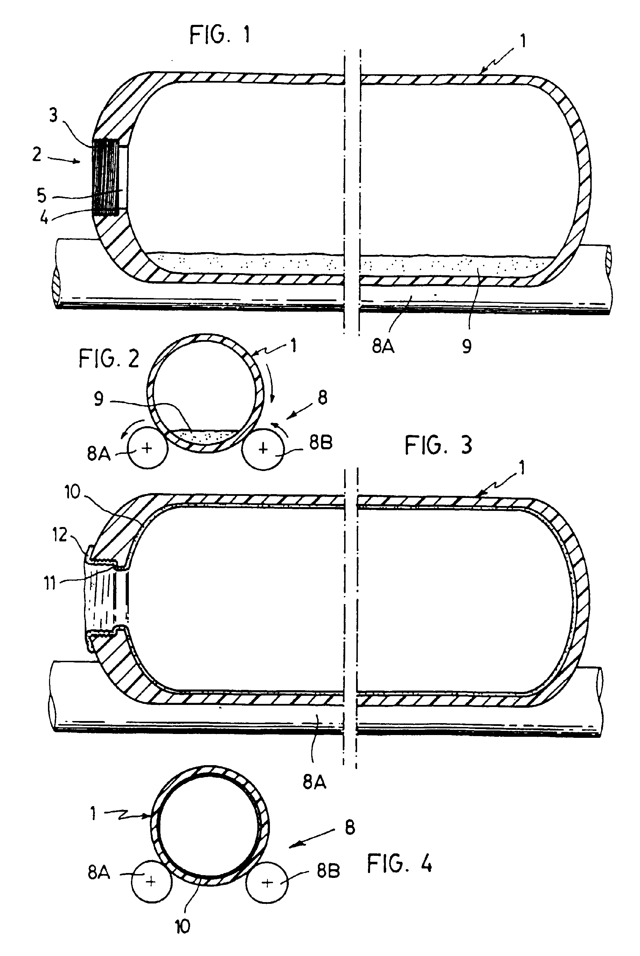

In accordance with the invention, as shown in Figures 1 and 2, once the container 1 has been obtained by the corresponding molding method from a first thermoplastic synthetic resin, it is held in such a way as to conserve the heat of molding and it is placed on a rotary molding arrangement 8 formed, for example, by two rotatory rollers 8A and 8B, after which there is poured in through the embouchure 2 thereof a second thermoplastic synthetic resin 9, the melting point of which is lower than the temperature at which the freshly formed container 1 is at and which is the temperature corresponding to the residual heat of this operation.

Under these circumstances, the second thermoplastic synthetic resin 9 melts and by the action of the rotary molding arrangement 8 there is formed a lining 10 which covers the entire inner surface of the container 1 and, furthermore, that of the passage 5, of the shoulder 4 and of the threaded portion 3 of the rim of the embouchure 2, as is shown in Figures 3 and 4, without becoming attached to any of them.

The amount of the second thermoplastic synthetic resin 9 used depends on the thickness of the lining 10 to be produced and this is determined by the amount of residual heat of the container 1 and also by the nature of the said second resin.

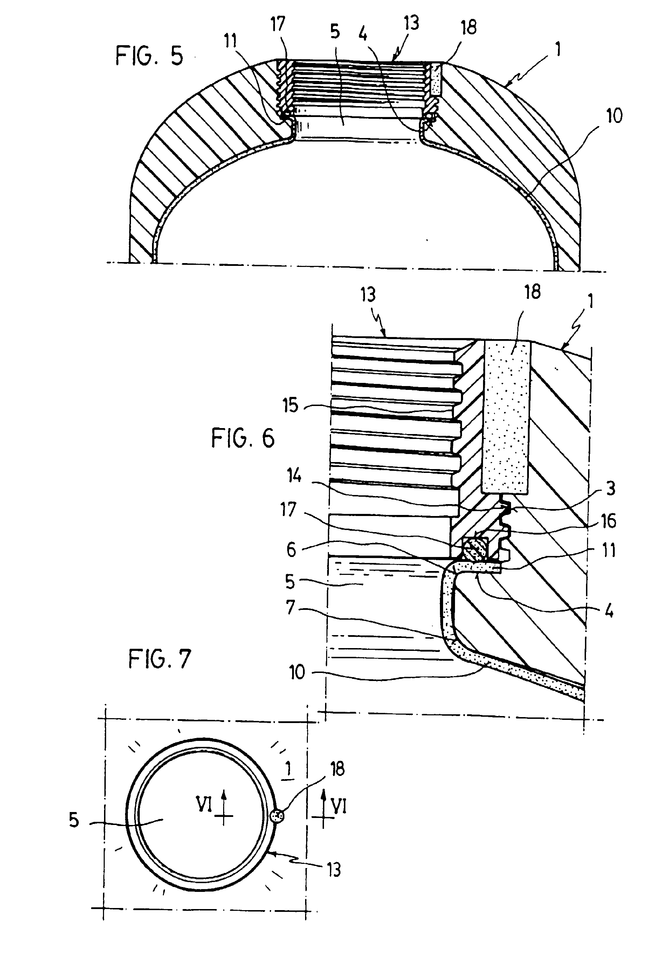

Solidification of the second thermoplastic synthetic resin 9 on forming the lining 10 also produces a flange 11 covering the entire annular shoulder 4 of the rim of the embouchure 2, as illustrated in Figures 3 and 5 and in greater detail in Figure 6. In order to define such flange, it is necessary to remove the part of the lining 10 that covers the threaded portion 3 and the external excess 12.

To the threaded portion 3 of the rim of the embouchure 2, as shown in Figures 5, 6 and 7, there is screwed a ring 13, provided with an external screw thread 14 mating with that of the threaded portion 3, to which it becomes attached and an internal screw thread 15, mating with that of the devices to be attached to the container 1.

The ring 13 is provided, on the inner edge thereof, with an annular slot 16 in which there is located an O-ring seal 17, in such a way that, as shown in Figure 6, when the ring 13 is screwed up tight, it compresses the O-ring seal 17 against the flange 11, which becomes hermetically applied against the annular shoulder 4, thereby making it impossible for the fluid contained in the container 1 and in contact with the lining 10 from coming into contact with the first thermoplastic synthetic resin forming the body of the container 1.

With a view to ensuring the positioning of the ring 13, an axial slot has been provided across one same point of the threads of the threaded portion 3 of the rim of the embouchure 2 and the external thread 14 of the ring 3 and which houses a key 18 formed by the solidification of a material injected into said slot. This slot may comprise an axially shared orifice which is formed once the ring 13 has been mounted to the rim of the embouchure 2. An adhesive sealant applied between the threads 3 and 14 may also be used for this purpose.

Preferably a caprolactam will be used as the first synthetic resin; one of the members of the group formed by polyethylene, polypropylene and polyethylene terephthalate, alone or in combination, as the second thermoplastic synthetic resin 9; and polypropylene for the ring 13.

Obviously, if the container 1 is at room temperature, it will be heated to a temperature above the melting point of the second resin 9, after which the latter will be placed in the container and the second resin will be rotary molded therein to form the lining 10.

The containers 1 produced according to the present method of the invention will be usable for food purposes, provided always that the second thermoplastic synthetic resin, the material of the ring 13 and the materials of the devices assembled to the latter are suitable for such purpose.

Furthermore, such containers 1, in all the cases contemplated in the invention, will be completely homogeneously recyclable, which will allow then to be considered as disposable containers, whereby once the product contained in them has been consumed, they will be destroyed and converted into a material suitable for remolding, whereby carriage costs are saved relative to the case in which, for not being readily recyclable, they must be used as returnable containers, in which case to the carriage expenses of bulky objects there must be added the expense of washing, disinfecting, relabeling, etc.

An important application for these containers 1, in view of their properties of food use and pressure resistance, is in the beer and carbonated beverages sector, where such containers may replace the traditional returnable wooden, steel and stainless steel barrels and improve their profitability as a result of being able to be considered, as said before, non-returnable containers, in which case the only expense payable is that of returning the containers in a compact form of recycled material suitable for remolding.

## Claims

1. A method for the manufacture of hollow bodies which do not contaminate the products contained therein, particularly hollow bodies which are produced by molding thermoplastic synthetic resins and are directed for forming containers (1) which, provided with an embouchure (2) and which define an interior and an inner surface, are completely and homogeneously recyclable at the end of their working life, wherein there is maintained the heat of molding of a hollow body, forming a container (1) having an embouchure (2) and produced by molding a first thermoplastic synthetic resin, in which there is applied in said interior, through said embouchure (2), a set amount of a second thermoplastic synthetic resin (9) having a melting point lower than the temperature of said hollow body due to the residual molding heat, after which said second resin (9) is rotary molded within the hollow body, which acts as a mold, until the second resin (9), after being melted by the said residual heat of molding, has solidified forming a lining (10) applied over the entire said inner surface of the hollow body and the entire inner periphery of the rim of said embouchure (2)

2. The method of claim 1, wherein the amount of second resin (9) used is determined in terms of the thickness of said lining (10) to be achieved and said thickness is determined by the amount of residual heat of said body and the nature of said second resin.

3. The method of claim 1, wherein said rim of said embouchure (2) is molded so as to form an annular shoulder (4) at the bottom thereof and a screw thread (3) on the cylindrical wall thereof.

4. The method of claim 3, wherein said inner lining (10), formed by the solidification of the second synthetic resin (9), forms a flange (11) on said annular shoulder (4) of said rim of said embouchure (2).

5. The method of claim 4, wherein an also internally threaded ring (13) is screwed into said screw thread (3) until it becomes firmly seated on said annular shoulder (4) and hermetically traps said flange (11) of said inner lining (10), by way of an O-ring seal (17) included in an annular groove (16) on the inner edge of said ring. (13)

6. The method of claim 5, wherein an axial slot is formed between said ring (13) and said rim and which, being produced in the same point on the screw threads of both, houses a key (18) formed by solidification of a material injected into said slot.

7. The method of claim 1, wherein the first thermoplastic synthetic resin is preferably a caprolactam.

8. The method of claim 1, wherein the second thermoplastic synthetic resin (9) is preferably, one of the group comprising polyethylene, polypropylene and polyethylene terephthalate, either alone or in combination.

9. The method of claim 5, wherein said threaded ring (13) is made by injection molding of a synthetic resin, preferably polypropylene.

10. The method of claim 1, wherein if said container (1) is at room temperature, it is heated to a temperature above the melting point of said second resin (9), after which said second resin (9) is fed into said container (1) and said second resin (9) is rotary molded to form said lining (10).
